# EUROPÄISCHE PATENTSCHRIFT

(11) **EP 2 188 541 B1**
(45) Veröffentlichungstag und Bekanntmachung des Hinweises auf die Patenterteilung: **18.04.2012**
(21) Anmeldenummer: 08785520.1
(22) Anmeldetag: 13.08.2008
(51) Int. Cl.: F16C 39/02, F16C 19/06, F16C 33/38

(54) **VERFAHREN UND LAGER ZUR LAGERUNG VON DREHBAREN GERÄTEN, INSBESONDERE EINES MEDIZINISCHEN SCANNERS**
METHOD AND BEARING FOR SUPPORTING ROTATABLE DEVICES, PARTICULARLY A MEDICAL SCANNER
PROCEDE ET PALIER DE MONTAGE D'APPAREILS ROTATIFS, NOTAMMENT D'UN SCANNER MEDICAL

(30) Priorität: 14.08.2007 DE 102007038489
(43) Veröffentlichungstag der Anmeldung: 26.05.2010
(73) Patentinhaber: Rothe Erde GmbH, 44137 Dortmund (DE); ThyssenKrupp Transrapid GmbH, 34127 Kassel (DE)
(72) Erfinder: BREUCKER, Uwe-Otto, 59590 Geseke (DE); CLAUS, Wolfgang, 59510 Lippetal (DE); ROLLMANN, Jörg, 59558 Lippstadt (DE); LÖSER, Friedrich, 85521 Riemerling (DE); ZHENG, Qinghua, 82024 Taufkirchen (DE); BAUER, Markus, 85354 Freising (DE)
(74) Vertreter: Dahlkamp, Heinrich-Leo
(86) Internationale Anmeldenummer: PCT/EP2008/006644
(87) Internationale Veröffentlichungsnummer: WO 2009/021721

(56) Entgegenhaltungen:
- EP-A- 1 223 357
- WO-A-2005/019654
- DE-A1- 2 163 199
- DE-A1- 4 227 013
- DE-A1- 10 224 100
- GB-A- 2 348 680
- JP-A- 5 122 896
- US-A- 4 683 111
- US-B1- 6 268 674

## Beschreibung

Die Erfindung bezieht sich auf ein Lager zur Lagerung von drehbaren Geräten, insbesondere eines medizinischen Scanners mit mindestens einem Innenring und mindestens einem Außenring gemäß dem Obergriff der unabhängigen Patentansprüche.

Insbesondere bei medizinischen Scannern ist die Geräuschemission ein wichtiges Designkriterium. Wesentliche Geräuschquelle beim Betrieb eines Scanners ist das Wälzlager, welches durch einen permanenten Umlauf (Wälzkontakt) der Wälzkörper kontinuierlich Körperschall erzeugt und auf die Anschlusskonstruktionen überträgt, die diesen als Luftschall (Geräusch) emittieren.

Zur Verringerung der Geräuschemissionen sind Wälzlager bekannt, bei denen z. B. die Laufdrähte in eine nicht metallische, vulkanisierte Zwischenschicht eingebettet sind (vgl. DE 10 2005 000 754 B3) oder bei denen die Laufringe in Futterringen aus Elastomer angeordnet sind (vgl. DE 103 31 150 B4) oder bei denen ohne wesentliche Erhöhung der Baugröße Dämpfungsmaterial mindestens zwischen einem Laufdraht und einem Lagerring in einem vergrößerten Laufdrahtbett des Lagerringes angeordnet ist (vgl. EP 71 026 A1).

Bei den vorgenannten Lagern wird der Körperschall aus dem Wälzkontakt durch zusätzliche Fugen und Kunststoffelemente gedämpft. Bei hohen Umfangsgeschwindigkeiten sind die zuvor beschriebenen Maßnahmen jedoch häufig nicht ausreichend, um den Geräuschpegel des Lagers auf einem ausreichend niedrigen Niveau zu halten.

Aus der US 6 268 674 B1 ist ein Lager gemäß Obergbegriff des Anspruches 1 bekannt, bei dem keine geeigneten Maßnahmen für den Fall des Ausfalls der Stromversorgung vorgesehen sind.

Der Erfindung liegt daher die Aufgabe zu Grunde, ein Lager für derartige Geräte vorzuschlagen, bei dem die Geräuschemission weiter reduziert werden kann und insbesondere ein ausreichender Schutz des Lagers bei Ausfall der Stromversorgung gegeben ist.

Die Lösung dieser Aufgabe ist jeweils in der Merkmalskombination eines der unabhängigen Patentansprüche enthalten. Die Unteransprüche enthalten ergänzende Ausführungsformen.

Zur Vermeidung der Körperschallanregung durch den Wälzkontakt wird ein Großwälzlager vorgeschlagen, bei dem der stehende Ring vom drehenden Ring durch das magnetische Feld von mehreren Elektromagneten getrennt wird, so dass im Betrieb kein metallischer Kontakt zwischen beiden Lagerringen vorliegt. Die Elektromagnete sind hierbei sowohl in axialer als auch radialer Richtung der Lagerachse angeordnet, um die abzustützenden Lagerkräfte und Momente aufzunehmen. Die Verteilung der Elektromagnete über den Lagerumfang kann gleichförmig oder der Belastung entsprechend angepasst sein. Das Lager enthält weiterhin optische oder induktive Abstandssensoren, die den Spaltabstand zwischen Außen- und Innenring vorzugsweise optisch, induktiv oder in sonstiger Weise messen und/oder kontrollieren. Eine rechnergesteuerte Regelung der Magnete erfolgt so, dass der Spaltabstand konstant gehalten wird. Bei einem erfindungsgemäßen Lager ist weiterhin ein Fanglager vorgesehen, das den rotierenden Ring trägt für den Fall, dass die Stromversorgung der Elektromagnete ausfällt. Dieses Fanglager kann als Gleit- oder Wälzlager ausgebildet sein.

Durch eine entsprechende Anordnung und Ansteuerung der Elektromagnete kann ein Drehmoment auf das Lager aufgebracht werden, welches den jeweiligen Rotor antreibt. Die Elektromagnete können auch dazu genutzt werden, die Steifigkeit des Lagers zu variieren und Schwingungen zu vermeiden. Durch eine Erhöhung des Stromes und damit der Kraft in den Elektromagneten kann die Steifigkeit gezielt erhöht werden. Hierdurch kann insbesondere dann die Eigenfrequenz des Lagers verändert und können somit Resonanzfrequenzen vermieden werden. Es hat sich darüber hinaus herausgestellt, dass durch die redundante Anordnung von Abstandssensoren und Elektromagneten die Ausfallwahrscheinlichkeit des Magnetlagers soweit reduziert werden kann, dass unter Umständen sogar auf die Fanglager verzichtet werden kann.

Schließlich können erfindungsgemäß auch die Elektromagnete und die Abstandssensoren insbesondere bei der ersten Inbetriebnahme dazu genutzt werden, das Lager auszuwuchten. Für das Auswuchten wird üblicher Weise ein- oder mehrfach eine Unwucht mit bekannter Masse, bekanntem Achsabstand und bekannter Umfangsposition am Rotor angebracht. In oder mit einer zusätzlichen Wuchteinrichtung wird anschließend die Reaktion, z. B. die Belastung oder Verschiebung des Rotors, gemessen. Nach an sich bekannten Verfahren kann aus diesen Ergebnissen der Ort und die Zusatzmasse bestimmt werden, die an dem Rotor befestigt werden muss, um den Rotor ohne Unwucht zu betreiben. Bei dem erfindungsgemäßen Lager kann nun mit Hilfe der Elektromagnete eine umlaufende Kraft entsprechend der bekannten Masse mit bekanntem Achsabstand und Ort auf den Rotor aufgebracht werden. Die Reaktion des Rotors bei konstanter Drehzahl kann danach durch die Abstandssensoren gemessen werden. Diese Messergebnisse werden dann im Betrieb mit bestimmter umlaufender Kraft zur Auswahl der Zusatzmasse und deren Anbringungsort verwendet.

Für den besonderen Fall, dass während des laufenden Betriebes sich eine Unwucht einstellt, kann diese auch während des laufenden Betriebes initiert durch die Messung mit Hilfe der Steuerung mit umlaufender Magnetkraft kompensiert werden.

Die Erfindung wird anhand der beigefügten Fig. 1 - 5 beispielsweise näher erläutert, wobei jeweils Innenring 1, 10, 11 und Außenring 2, 12, 20 ausschnittsweise im Querschnitt dargestellt sind.

Es zeigen im Einzelnen:
- Fig. 1: Die Anordnung mit den im Außenring 2 angeordneten Elektromagneten 3a, 3b.
- Fig. 2: Die Anordnung mit im Innenring 11 angeordneten Elektromagneten 13a, 13b.
- Fig. 3: Eine Anordnung entsprechend Fig. 1 mit einem mehrteiligen Innenring 10.
- Fig. 4: Eine Anordnung entsprechend Fig. 2 mit einem mehrteiligen Außenring 20.
- Fig. 5: Einen Schnitt nach Linie I-I von Fig. 2.

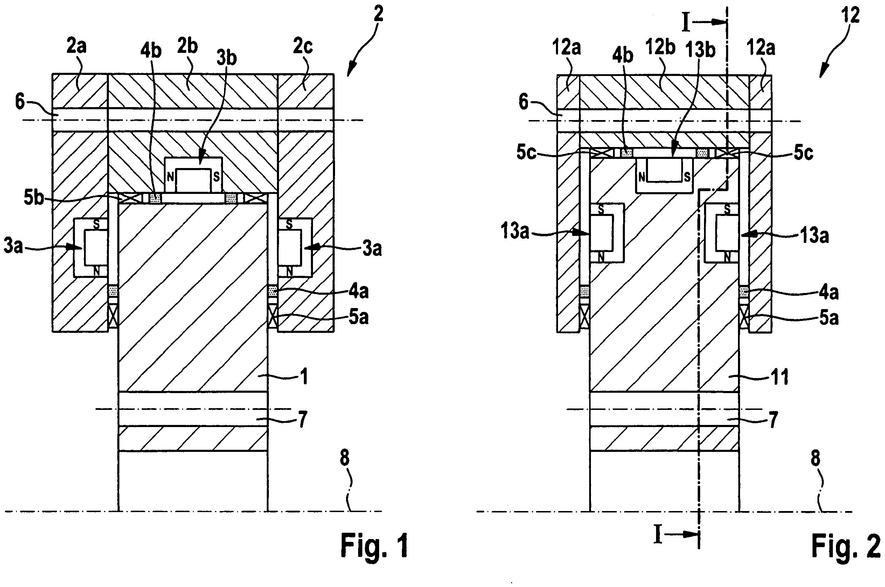

Nach Fig. 1 ist der Außenring 2 als Stator ausgebildet, wobei in den einzelnen Außenringen 2a und 2c die Elektromagnete 3a und im Außenring 2b die Elektromagnete 3b angeordnet sind, die den beiden Axialflächen und der Radialfläche des als Rotor dienenden Innenringes 1 gegenüberliegen. Mit Hilfe dieser Elektromagnete 3a, 3b werden Innenring 1 und Außenring 2 während der Rotation um die gemeinsame Drehachse 8 in einem gleichmäßigem Abstand zueinander gehalten, so dass im Betrieb kein metallischer Kontakt zwischen beiden Lagerringen vorliegt. Zur Kontrolle und Steuerung des Spaltabstandes sind in der Nähe der Elektromagnete 3a, 3b jeweils Abstandssensoren 4a, 4b vorgesehen. Die Fanglager 5a - 5e sind entweder am Außenring 2, 12, 20 oder am Innenring 1, 10, 11 befestigt und besitzen im normalen Betrieb einen geringen Abstand gegenüber der gegenüberliegenden Fläche. Bei Ausfall der Stromversorgung für die Elektromagnete 3a, 3b können diese Fanglager 5a - 5e den jeweils rotierenden Ring tragen. Die Bohrungen 6 und 7 dienen zur Befestigung des jeweiligen Ringes an den nicht dargestellten Anschlusskonstruktionen.

Bei Fig. 2 ist der Innenring 11 als Stator ausgebildet, an dem die Elektromagnete 13a, 13b angeordnet sind. Der Außenring 12 umschließt mit den einzelnen Ringen 12a, 12b u-förmig das äußere Ende des Innenringes 11, wobei in gleicher Weise die Fanglager 5a, 5c und die Abstandssensoren 4a, 4b im Spalt zwischen den beiden Ringen 11 und 12 angeordnet sind.

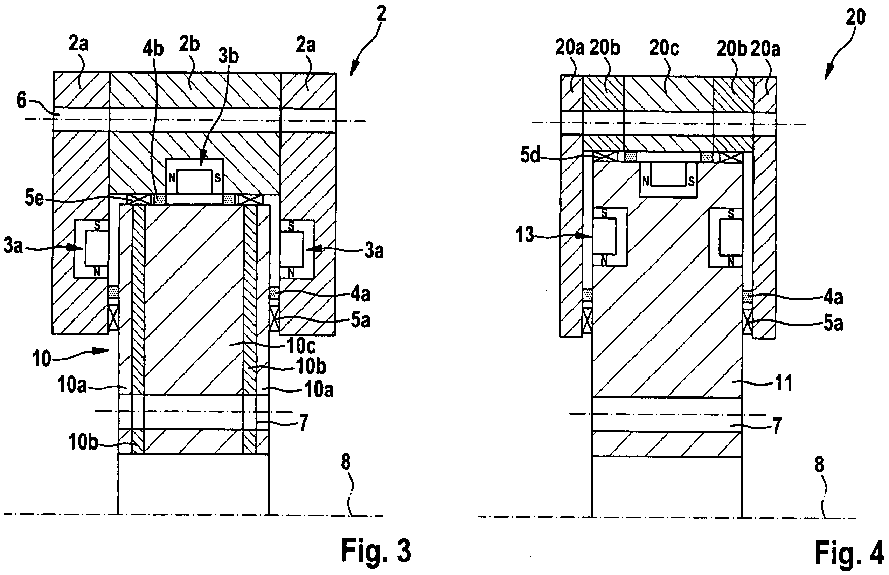

In Fig. 3 ist der Innenring 10 mehrteilig ausgebildet, wobei zwischen den beiden magnetischen Innenringen 10a, 10c ein amagnetischer Innenring 10b angeordnet ist. Am äußeren Umfang kann dieser Innenring 10b als Gleitelement gegenüber dem Fanglager 5e fungieren, wobei als Gleitlagerwerkstoff Kunststoff oder Bronze verwendet wird.

Bei der Fig. 4 ist der Außenring 20 mehrteilig ausgebildet, wobei zwischen den magnetischen Außenringen 20a und 20c der amagnetische Außenring 20b sich befindet. Die amagnetischen Ringe 10b, 20b dienen zur magnetischen Isolierung zwischen den benachbarten Ringen 10a, 10c bzw. 20a, 20c. Auch der amagnetischen Außenring 20b kann als Gleitelemente gegenüber dem Fanglager 5d genutzt werden.

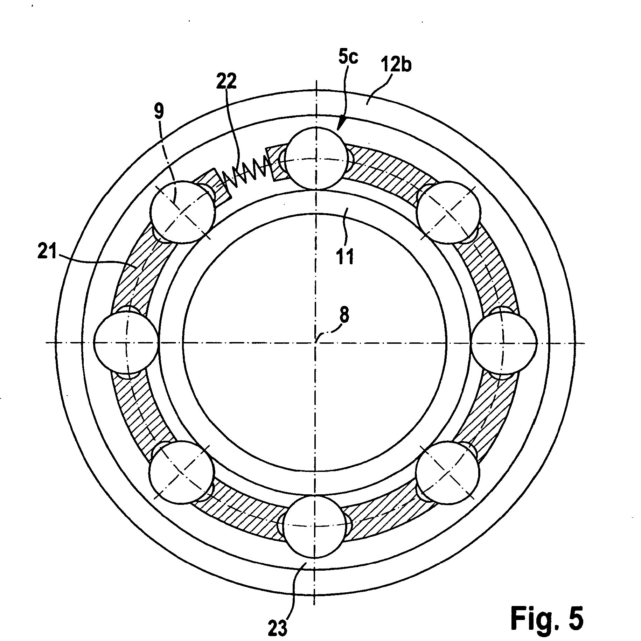

In Fig. 5 ist in vergrößerter Darstellung die Anordnung eines Kugellagers mit Kugeln 9 zu sehen, wobei die Kugeln umlaufend in einem Käfig 21 geführt werden. Mit Hilfe der Feder 22 ist ein vorgespannter Käfig 21 vorhanden. Das hat den Vorteil, dass sichergestellt ist, dass das als Wälzlager ausgebildete Fanglager 5c nur dann bewegt wird, wenn das Fanglager 5c tatsächlich belastet wird. Für diesen Fall der Verwendung eines Kugellagers bei der Ausführung nach Fig. 2 kann dort auf das Fanglager 5a verzichtet werden. Von Bedeutung ist hierbei auch, dass zwischen dem Außenring 12b und den Kugeln 9 ein Abstand 23 im normalen Betriebszustand des Lagers eingehalten wird. Falls es zu einem Kontakt in diesem Bereich kommt, verhindert das Kugellager eine übermäßige Reibung.

### Bezugszeichenliste

- 1: Innenring (als Rotor)
- 2, 2a, 2b, 2c: Außenring (als Stator)
- 3a, 3b: Elektromagnet (an 2a, 2b)
- 4a, 4b: Abstandssensor
- 5a, 5b, 5c, 5d, 5e: Fanglager
- 6: Bohrung (für Befestigung von 2 an Anschlusskonstruktion)
- 7: Bohrung (für Befestigung von 1 an Anschlusskonstruktion)
- 8: Drehachse (von 1, 2 etc.)
- 9: Kugel (von 5c)
- 10: Innenring (mehrteilig, als Rotor)
- 10a, 10c: Innenring (magnetisch)
- 10b: Innenring (amagnetisch)
- 11: Innenring (als Stator)
- 12, 12a, 12b: Außenring (als Rotor)
- 13a, 13b: Elektromagnet (an 11)
- 20: Außenring (mehrteilig, als Rotor)
- 20a, 20c: Außenring (magnetisch)
- 20b: Außenring (amagnetisch)
- 21: Käfig (für 9)
- 22: Feder
- 23: Abstand (zwischen 12b und 9)

## Patentansprüche

1. Lager für drehbare Geräte, insbesondere für einen medizinischen Scanner mit einem Innenring (1, 11) und einem Außenring (2, 12), wobei
- Innenring (1, 11) und Außenring (2, 12) durch das magnetische Feld von Elektromagneten (3a, 3b) in axialer und/oder radialer Richtung berührungslos geführt sind,
- der Abstand zwischen ihnen mit Hilfe von Abstandssensoren (4a, 4b) kontrolliert und gesteuert wird,
- der Außenring (2, 12) mehrteilig ausgeführt ist und im zusammengebauten Zustand einen u-förmigen nach innen offenen Querschnitt besitzt,
- in den Außenring (2, 12) der Innenring (1, 11) hinein ragt,
- in den axial und radial gegenüberliegenden Bereichen von Innenring (1, 11) oder Außenring (2, 12) jeweils Elektromagnete (3a, 3b) und Abstandssensoren (4a, 4b) angeordnet sind,
**dadurch gekennzeichnet, dass**
- neben oder im Bereich der Elektromagnete (3a, 3b) jeweils wenigstens ein Fanglager (5a, 5b, 5c, 5d, 5e) angeordnet ist, das den rotierenden Ring bei Ausfall der Stromversorgung für die Elektromagnete (3a, 3b) trägt und dass
- wenigstens eines der Fanglager (5c) als zwischen den radial gegenüberliegenden Bereichen von Innenring (1, 11) und Außenring (2, 12) angeordnetes Radialwälzlager mit Kugeln (9) oder Rollen, die in einem mit mindestens einer Feder (22) vorgespannten Käfig (21) gehalten werden, ausgebildet ist.

2. Lager für drehbare Geräte, insbesondere für einen medizinischen Scanner mit einem Innenring (10) und einem Außenring (20), wobei
- Innenring (10) und Außenring (20) durch das magnetische Feld von Elektromagneten (3a, 3b) in axialer und/oder radialer Richtung berührungslos geführt sind,
- der Abstand zwischen ihnen mit Hilfe von Abstandssensoren (4a, 4b) kontrolliert und gesteuert wird,
- der Außenring (20) mehrteilig ausgeführt ist und im zusammengebauten Zustand einen u-förmigen nach innen offenen Querschnitt besitzt,
- in den Außenring (20) der Innenring (10) hinein ragt,
- in den axial und radial gegenüberliegenden Bereichen von Innenring (10) oder Außenring (20) jeweils Elektromagnete (3a, 3b) und Abstandssensoren (4a, 4b) angeordnet sind,
**dadurch gekennzeichnet, dass**
- neben oder im Bereich der Elektromagnete (3a, 3b) jeweils wenigstens ein Fanglager (5a, 5b, 5c, 5d, 5e) angeordnet ist, das den rotierenden Ring bei Ausfall der Stromversorgung für die Elektromagnete (3a, 3b) trägt und dass
- wenigstens eines der Fanglager (5d, 5e) als Radialgleitlager ausgebildet ist,
- und der Innenring (10) oder Außenring (20), der keinen Elektromagneten (3a, 3b) trägt, aus mehreren magnetischen Ringen (10a, 10c, 20a, 20c) besteht, die durch amagnetische Ringe (10b, 20b) voneinander getrennt sind, und die amagnetischen Ringe (10b, 20b) als Gleitelemente des als Radialgleitlager ausgebildeten Fanglagers (5d, 5e) fungieren.

3. Lager nach Anspruch 1 oder 2, **dadurch gekennzeichnet, dass** die Elektromagnete (3a, 3b) in zum gegenüberliegenden Ring offenen Aussparungen entweder im Außenring (2) oder im Innenring (11) angeordnet sind.

4. Lager nach Anspruch 1 oder 3, **dadurch gekennzeichnet, dass** neben oder im Bereich der Elektromagnete (3a, 3b) jeweils ein oder mehrere Abstandssensoren (4a, 4b) angeordnet sind, die optisch, induktiv oder in ähnlicher Weise arbeiten.

5. Lager nach Anspruch 1 oder 2 **dadurch gekennzeichnet, dass** die Abstandssensoren (4a, 4b) und die Elektromagnete (3a, 3b) redundant im Lager angeordnet sind.

6. Lager nach Anspruch 1 oder 2, **dadurch gekennzeichnet, dass** die Abstandssensoren (4a, 4b) und die Elektromagnete (3a, 3b) und die Steuerung mit einer unterbrechungsfreien Stromversorgung verbunden sind.

7. Lager nach Anspruch 1 oder 2, **dadurch gekennzeichnet, dass** der Außenring (2, 12, 20) auf seinem Außendurchmesser mit Eingriffsmöglichkeiten für einen Zahn- oder Keilriemen versehen ist.

8. Lager nach Anspruch 1 oder 2, **dadurch gekennzeichnet, dass** die Abstandssensoren (4a, 4b) und die Elektromagnete (3a, 3b) geschützt eingebaut sind und so geformt sind, dass auch ein Einsatz des Lagers in flüssigen Medien, insbesondere Wasser möglich ist.

9. Lager nach Anspruch 2, **dadurch gekennzeichnet, dass** die amagnetischen Ringe (10b, 20b) aus Kunststoff oder Bronze bestehen.

## Claims

1. Bearing for rotatable devices, in particular for a medical scanner having an inner ring (1, 11) and an outer ring (2, 12), wherein
- the inner ring (1, 11) and outer ring (2, 12) are guided in a contact-free manner in the axial and/or radial direction by the magnetic field of electromagnets (3 a, 3b),
- the distance between them is monitored and controlled with the aid of distance sensors (4a, 4b),
- the outer ring (2, 12) is formed from a number of parts and, when in the assembled state, has a u-shaped, inwardly open cross-section,
- the inner ring (1, 11) protrudes into the outer ring (2, 12),
- respective electromagnets (3a, 3b) and distance sensors (4a, 4b) are disposed in the axially and radially opposing regions of the inner ring (1, 11) or outer ring (2, 12), **characterised in that**
- next to, or in the region of, the electromagnets (3a, 3b) at least one respective safety bearing (5a, 5b, 5c, 5d, 5e) is disposed which supports the rotating ring in the event of a failure in the power supply to the electromagnets (3a, 3b) and that
- at least one of the safety bearings (5c) is formed as a radial roller bearing with balls (9) or rollers, which is disposed between the radially opposing regions of the inner ring (1, 11) and outer ring (2, 12), these balls or rollers being held in a cage (21) which is biased by at least one spring (22).

2. Bearing for rotatable devices, in particular for a medical scanner having an inner ring (10) and an outer ring (20), wherein
- the inner ring (10) and outer ring (20) are guided in a contact-free manner in the axial and/or radial direction by the magnetic field of electromagnets (3a, 3b),
- the distance between them is monitored and controlled with the aid of distance sensors (4a, 4b),
- the outer ring (20) is formed from a number of parts and, when in the assembled state, has a u-shaped, inwardly open cross-section,
- the inner ring (10) protrudes into the outer ring (20),
- respective electromagnets (3a, 3b) and distance sensors (4a, 4b) are disposed in the axially and radially opposing regions of the inner ring (10) or outer ring (20), **characterised in that**
- next to, or in the region of, the electromagnets (3 a, 3b) at least one respective safety bearing (5a, 5b, 5c, 5d, 5e) is disposed which supports the rotating ring in the event of a failure in the power supply to the electromagnets (3a, 3b) and that
- at least one of the safety bearings (5d, 5e) is formed as a radial slide bearing,
- and the inner ring (10) or outer ring (20), which does not support any electromagnets (3a, 3b), consists of a plurality of magnetic rings (10a, 10c, 20a, 20c) which are separated from each other by amagnetic rings (10b, 20b), and the amagnetic rings (10b, 20b) act as slide elements of the safety bearing (5d, 5e) which is formed as a radial slide bearing.

3. Bearing as claimed in claim 1 or 2, **characterised in that** the electromagnets (3a, 3b) are disposed in apertures, which are open with respect to the opposing ring, either in the outer ring (2) or in the inner ring (11).

4. Bearing as claimed in claim 1 or 3, **characterised in that** next to, or in the region of, the electromagnets (3a, 3b) in each case one or a plurality of distance sensors (4a, 4b) are disposed which operate optically, inductively or in a similar manner.

5. Bearing as claimed in claim 1 or 2, **characterised in that** the distance sensors (4a, 4b) and the electromagnets (3a, 3b) are disposed redundantly in the bearing.

6. Bearing as claimed in claim 1 or 2, **characterised in that** the distance sensors (4a, 4b) and the electromagnets (3a, 3b) and the control are connected to an uninterruptible power supply.

7. Bearing as claimed in claim 1 or 2, **characterised in that** the outer ring (2, 12, 20) is provided on its outer diameter with engagement facilities for a toothed belt or V-belt.

8. Bearing as claimed in claim 1 or 2, **characterised in that** the distance sensors (4a, 4b) and the electromagnets (3a, 3b) are installed in a protected manner and are formed in such a way that it is even possible to use the bearing in liquid media, in particular water.

9. Bearing as claimed in claim 2, **characterised in that** the amagnetic rings (10b, 20b) consist of synthetic material or bronze.

## Revendications

1. Palier pour le montage d'appareils rotatifs, en particulier d'un scanner médical avec une bague intérieure (1, 11) et une bague extérieure (2, 12), sachant que
- la bague intérieure (1, 11) et la bague extérieure (2, 12) sont guidées, sans contact, à travers le champ magnétique d'électroaimants (3a, 3b), en direction axiale et /ou en direction radiale,
- l'intervalle entre elles est contrôlé et commandé à l'aide de détecteurs de distance (4a, 4b),
- la bague extérieure (2, 12) est exécutée en plusieurs pièces et présente, à l'état assemblé, une section transversale en U, ouverte vers l'intérieur,
- la bague intérieure (1, 11) fait saillie à l'intérieur de la bague extérieure (2, 12),
- dans chacune des sections de la bague intérieure (1, 11) ou de la bague extérieure (2, 12), opposées axialement ou radialement, sont agencés des électroaimants (3a, 3b) et des détecteurs de distance (4a, 4b),
**caractérisé en ce que**
- à côté ou dans la région de chacun des électroaimants (3a, 3b), est disposé au moins un palier d'arrêt (5a, 5b, 5c, 5d, 5e), qui porte la bague rotative en cas de manque de courant d'alimentation des électroaimants (3a, 3b), et
- au moins l'un des paliers d'arrêt (5c) est réalisé sous la forme d'un palier à roulement radial, qui, doté de billes (9) ou de rouleaux, maintenus dans une cage (21) précontrainte par au moins un ressort (2), est disposé entre les sections de la bague intérieure (1, 11) et de la bague extérieure (2, 12) radialement opposées.

2. Palier pour le montage d'appareils rotatifs, en particulier d'un scanner médical avec une bague intérieure (10) et une bague extérieure (20), sachant que
- la bague intérieure (10) et la bague extérieure (20) sont guidées, sans contact, à travers le champ magnétique d'électroaimants (3a, 3b), en direction axiale et / ou en direction radiale,
- l'intervalle entre elles est contrôlé et commandé à l'aide de détecteurs de distance (4a, 4b),
- la bague extérieure (20) est exécutée en plusieurs pièces et présente, à l'état assemblé, une section transversale en U, ouverte vers l'intérieur,
- la bague intérieure (10) fait saillie à l'intérieur de la bague extérieure (20),
- dans chacune des sections de la bague intérieure (10) ou de la bague extérieure (20), opposées axialement ou radialement, sont agencés des électroaimants (3a, 3b) et des détecteurs de distance (4a, 4b),
**caractérisé en ce que**
- à côté ou dans la région de chacun des électroaimants (3a, 3b), est disposé au moins un palier d'arrêt (5a, 5b, 5c, 5d, 5e), qui porte la bague rotative en cas de manque de courant d'alimentation des électroaimants (3a, 3b), et
- au moins l'un des paliers d'arrêt (5d, 5e) est réalisé sous la forme d'un palier à roulement radial, et que
- la bague intérieure (10) ou la bague extérieure (20), ne portant pas d'électroaimants (3a, 3b) consiste en plusieurs bagues magnétiques (10a, 10c, 20a, 20c), qui sont séparées les unes des autres par des bagues amagnétiques (10b, 20b), et que les bagues amagnétiques (10b, 20b) servent d'éléments de glissement du palier d'arrêt (5d, 5e), qui est réalisé sous la forme d'un palier de roulement radial.

3. Palier selon revendication 1 ou 2, **caractérisé en ce que** les électroaimants (3a, 3b) sont disposés soit dans la bague extérieure (2) soit dans la bague intérieure (11), dans des évidements ouverts vers la bague opposée.

4. Palier selon revendication 1 ou 3, **caractérisé en ce que** sont disposés, à côté ou dans la région de chacun des électroaimants (3a, 3b), un ou plusieurs détecteurs de distance (4a, 4b), qui fonctionnent de manière optique, inductive ou de manière similaire.

5. Palier selon revendication 1 ou 2, **caractérisé en ce que** les détecteurs de distance (4a, 4b) et les électroaimants (3a, 3b) sont installés de manière redondante dans le palier.

6. Palier selon revendication 1 ou 2, **caractérisé en ce que** les détecteurs de distance (4a, 4b) et les électroaimants (3a, 3b) ainsi que la commande sont reliés à un système d'alimentation en courant exempte d'interruptions.

7. Palier selon revendication 1 ou 2, **caractérisé en ce que** la bague extérieure (2, 12, 20) est pourvue, sur son diamètre extérieur, de moyens de prise pour une courroie dentée ou trapézoïdale.

8. Palier selon revendication 1 ou 2, **caractérisé en ce que** les détecteurs de distance (4a, 4b) et les électroaimants (3a, 3b) sont incorporés de manière protégée et sont formés de sorte que le palier puisse être aussi utilisé dans des média liquides, en particulier dans de l'eau.

9. Palier selon la revendication 2, **caractérisé en ce que** les bagues magnétiques sont en matière synthétique ou en bronze.
